# EUROPÄISCHE PATENTSCHRIFT

(11) **EP 1 464 866 B1**
(45) Veröffentlichungstag und Bekanntmachung des Hinweises auf die Patenterteilung: **01.07.2009**
(21) Anmeldenummer: 04005514.7
(22) Anmeldetag: 09.03.2004
(51) Int. Cl.: F16F 9/04, B60G 17/052

(54) **Luftfederanordnung**
Air spring assembly
Ensemble ressort pneumatique

(30) Priorität: 03.04.2003 DE 10315355
(43) Veröffentlichungstag der Anmeldung: 06.10.2004
(73) Patentinhaber: Carl Freudenberg KG, 69469 Weinheim (DE)
(72) Erfinder: Branco, Antonio, 21244 Buchholz (DE); Sack, Peter, Dr.-Ing., 21039 Escheburg (DE); Pelz, Peter, Dr.-Ing., 22769 Hamburg (DE)
(74) Vertreter: Mattausch, Klaus

(56) Entgegenhaltungen:
- EP-A- 0 166 702
- EP-A- 0 474 171
- EP-A- 1 152 166
- WO-A-02/103218
- DE-A1- 10 103 493
- DE-U1- 20 115 998
- FR-A- 752 886
- GB-A- 1 068 167
- US-A- 4 372 545
- US-B1- 6 644 632
- PATENT ABSTRACTS OF JAPAN Bd. 012, Nr. 149 (M-694), 10. Mai 1988 (1988-05-10) & JP 62 270840 A (TOKICO LTD), 25. November 1987 (1987-11-25)
- PATENT ABSTRACTS OF JAPAN Bd. 008, Nr. 224 (M-331), 13. Oktober 1984 (1984-10-13) & JP 59 106308 A (ISUZU JIDOSHA KK), 20. Juni 1984 (1984-06-20)

## Beschreibung

Die Erfindung betrifft eine Luftfederanordnung eines Fahrzeugs, bestehend aus:
- einem Luftfederbalg aus elastomerem Werkstoff, der unter Ausbildung einer Schlaufe eine volumenelastische Luftkammer umschließt;
- einem Deckel und Abrollkolben, die je einen Anschlussbereich für das jeweilige Balgende aufweisen, wobei die Schlaufe an der Außenwand des Abrollkolbens entlang abrollen kann; sowie
- einem Zusatzvolumen, das mittels einer Verbindung, die eine Luftsäule umfasst, mit der volumenelastischen Luftkammer kommuniziert;
- wobei die Verbindung ein dynamisches Ventilsystem umfasst, das so arbeitet, dass in Abhängigkeit von der Frequenz und/oder der Amplitude und/oder des Druckes und/oder der Luftgeschwindigkeit der Luftsäule die Verbindung geschlossen oder geöffnet werden kann oder eine gedrosselte Luftzufuhr erfolgt, wobei das dynamische Ventilsystem einen Luftkanal und ein Feder-Masse-System umfasst, welches den Luftkanal geschlossen oder geöffnet hält.

Eine solche Luftfederanordnung ist aus der JP 62 270840 A bekannt.

Aus der Gebrauchsmusterschrift DE 202 14 583 U1 ist eine Luftfederanordnung bekannt, bei der das Volumen des gesamten die Luft der Luftfeder einschließenden Raumes mittels eines in das gesamte Luftfedervolumen integrierten, variablen Zusatzvolumens zusätzlich variabel verändert werden kann. Diese zusätzliche Volumenveränderung der Luftfeder wird mittels einer elektronischen Steuerung in Anhängigkeit von den Messergebnissen wenigstens eines Beschleunigungssensors bewerkstelligt, beispielsweise in Form eines mit dem Luftfedervolumen direkt verbundenen Balges, der wiederum mittels eines von einer elektronischen Steuerung gesteuerten Hydraulik-Zylinders verlängert oder verkürzt werden kann.

Die Luftfederanordnung kann als einfache Luftfeder mit den Grundbauteilen Luftfederbalg, Deckel und Abrollkolben (DE 100 01 018 A1, DE 101 03 493 A1) oder als Luftfeder-Dämpfer-Einheit (DE 199 32 717 A1, DE 100 50 028 A1), bei der neben den oben genannten Grundbauteilen noch eine Dämpfervorrichtung vorhanden ist, ausgebildet sein.

Bei Luftfederanordnungen der oben beschriebenen Art ist das Dämpfungsverhalten bzw. die Kennung unter anderem abhängig von dem zur Verfügung stehenden Luftvolumen. Nach dem derzeitigen Stand der Technik wird zumeist ein fest vorgegebenes Luftvolumen verwendet wie auch neuerdings mit Zusatzvolumen gemäß DE 202 14 583 U1 gearbeitet, da die eingesetzten Behälter keine von der Fahrdynamik abhängige Variation des Luftvolumens zulassen. Unterschieden werden können hierbei im Wesentlichen folgende vier Varianten, nämlich:
A) Fahrt auf ebener Straße;
B) Fahrt auf unebener Straße;
C) normale Kurvenfahrt;
D) extreme Kurvenfahrt (Elchtest).

Diese Fahrzustände stellen unterschiedliche Anforderungen an die Federung und/oder Dämpfung und somit auch an die notwendigen Luftvolumina.

Die Aufgabe der Erfindung besteht nun darin, eine gattungsgemäße Luftfederanordnung bereitzustellen, deren Verbindung zum Zusatzvolumen abhängig von den oben genannten Fahrsituationen (A, B, C, D) selbständig schaltet.

Gelöst wird diese Aufgabe gemäß Kennzeichen des Patentanspruchs 1 dadurch, dass das Feder-Masse-System des Ventilsystems eine Zylindermasse umfasst, die von einer Feder umgeben ist, die Zylindermasse innerhalb eines erweiterten Zylinderraumes in axialer Richtung nach beiden Seiten bewegbar ist und die Erweiterung des Zylinderraumes insbesondere gleichmäßig umlaufend ist und den Luftkanal mit seinen beiden Enden bildet, wobei im geschlossenen Zustand der Verbindung die Zylindermasse eine der beiden Enden des Luftkanals versperrt, wobei der erweiterte Zylinderraum zwei konische Endbereiche und einen zylindrischen Mittenbereich aufweist und die Zylindermasse innerhalb ihres mittigen Bereiches eine vorspringende Zusatzmasse aufweist, die insbesondere gleichmäßig umlaufend angeordnet ist.

Die Erfindung wird nun anhand von Ausführungsbeispielen unter Bezugnahme auf schematische Zeichnungen erläutert. Es zeigen:
- Fig. 1: eine Prinzipskizze der Luftfederanordnung mit Zusatzvolumen und dynamischem Ventilsystem;
- Fig. 2: eine Luftfederanordnung, deren Verbindung ein modifiziertes Feder-Masse-System umfasst.

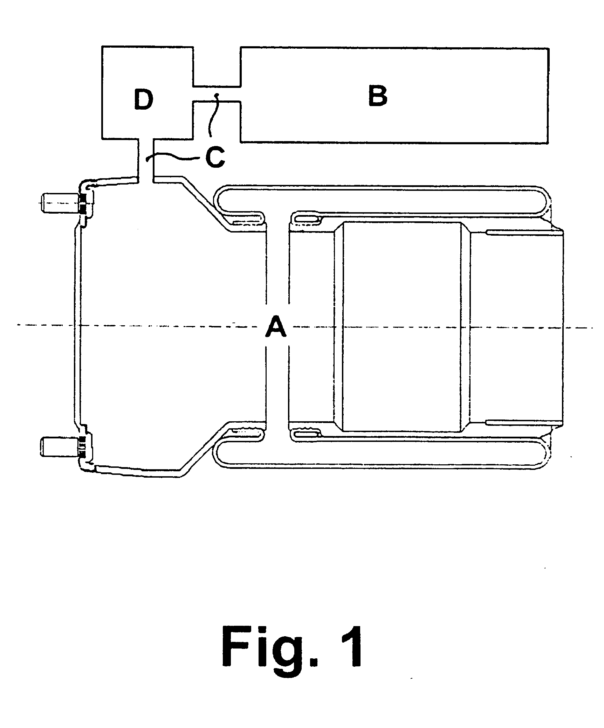

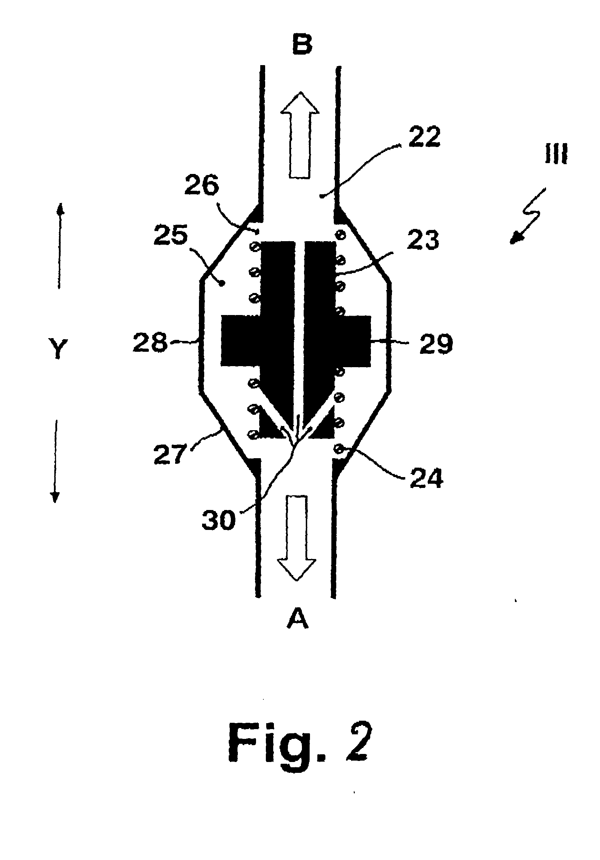

Nach Fig. 1 besteht die Luftfederanordnung aus einer Luftfeder, wie sie in der Offenlegungsschrift DE 101 03 493 A1 detailliert beschrieben ist, wobei die Luftfeder eine volumenelastische Luftkammer A aufweist. Ein Zusatzvolumen B kommuniziert mittels einer Verbindung C, die eine Luftsäule umfasst, mit der volumenelastischen Luftkammer A. Die Verbindung C umfasst wiederum ein dynamisches Ventilsystem D, das so arbeitet, dass in Abhängigkeit von der Frequenz und/oder der Amplitude und/oder des Druckes und/oder der Luftgeschwindigkeit der Luftsäule die Verbindung C geschlossen oder geöffnet werden kann oder eine gedrosselte Luftzufuhr erfolgt. Von besonderer Bedeutung ist dabei das kombinative Zusammenwirken von Frequenz, Amplitude, Druck und Luftgeschwindigkeit der Luftsäule, was bei dem Ausführungsbeispiel gemäß Fig. 2 der Fall ist.

Die Verbindung C mit dem integrierten dynamischen Ventilsystem D kann man auch als dynamische Verbindung oder dynamische Volumenkopplung bezeichnen.

Nach Fig. 2 umfasst das Feder-Masse-System des Ventilsystems III eine Zylindermasse 23, die von einer Feder 24 umgeben ist. Die Zylindermasse ist dabei innerhalb eines erweiterten Zylinderraumes in axialer Richtung Y nach beiden Seiten bewegbar, und zwar in Richtung Zusatzvolumen B (Einfedervorgänge) oder in Richtung Luftfeder mit der volumenelastischen Luftkammer A (Ausfedervorgänge). Die Erweiterung des Zylinderraumes ist insbesondere gleichmäßig umlaufend und bildet den Luftkanal 25 mit den beiden Enden 26. Im geschlossenen Zustand der Verbindung 22 versperrt die Zylindermasse eine der beiden Enden.

Der erweiterte Zylinderraum weist zwei konische Endbereiche 27 und einen zylindrischen Mittenbereich 28 auf. Die Zylindermasse 23 ist dabei innerhalb ihres mittigen Bereiches mit einer vorspringenden Zusatzmasse 29 versehen, die insbesondere gleichmäßig umlaufend angeordnet ist. Auf diese Weise wird eine weiche Luftfederkennung bei kleinen Amplituden ermöglicht.

Die Zylindermasse 23 besitzt ferner eine Bohrung 30, und zwar in Form einer Einzelbohrung oder wie hier dargestellt eines Bohrungssystems. Diese Bohrung erfasst stets die Verbindung 22 luftdurchströmend und ist dabei so dimensioniert, dass eine dynamische Entkopplung gegeben ist.

Die dynamischen Verbindungen, wie sie im Ausführungsbeispiel gemäß Fig. 1 dargestellt sind, arbeiten im Wesentlichen passiv. Dies bedeutet, dass keine zusätzlichen externen Systeme notwendig sind. gegebenenfalls können diese passiven Systeme lediglich durch externe Steuerungen in ihrer Kennung (Eigenschaften, Ansprechverhalten etc.) beeinflusst werden.

Im Rahmen weiterer Ausführungsbeispiele kann der Deckel 3 als Luftfedertopf (DE 101 03 493 A1) ausgebildet sein, wobei dann die Verbindung in den Luftfedertopf mündet.

Die dynamische Volumenkopplung kann auch bei Luftfeder-Dämpfer-Einheiten (DE 199 32 717 A1, DE 100 50 028 A1) zur Anwendung gelangen.

### Bezugszeichenliste

- **1**: Luftfederanordnung
- **2**: Luftfederbalg
- **3**: Deckel
- **4**: Abrollkolben (Tauchkolben)
- **5**: Befestigungsmittel (Klemmring)
- **6**: volumenelastische Luftkammer
- **7**: Schlaufe (Rollfalte)
- **8**: Außenwand (Abrollfläche) des Abrollkolbens
- **9**: Luftbehälter
- **10**: Zusatzvolumen
- **11**: Verbindung
- **12**: Luftsäule
- **13**: Luftkanal
- **14**: Zylindermasse (Schließzylinder)
- **15**: Stirnseite der Zylindermasse
- **16**: Feder
- **17**: Ende des Luftkanals
- **18**: Verbindung
- **19**: Membran
- **20**: Bypass
- **21**: Sieb
- **22**: Verbindung
- **23**: Zylindermasse (Schließzylinder)
- **24**: Feder
- **25**: Luftkanal
- **26**: Ende des Luftkanals
- **27**: konischer Endbereich
- **28**: zylindrischer Mittenbereich
- **29**: Zusatzmasse
- **30**: Bohrung (Einzelbohrung, Bohrungssystem)
- I: dynamisches Ventilsystem (Feder-Masse-System)
- II: dynamisches Ventilsystem (Membran-Sieb-Bypass-System)
- III: dynamisches Ventilsystem (Feder-Masse-System)
- A: volumenelastische Luftkammer
- B: Zusatzvolumen
- C: Verbindung
- D: dynamisches Ventilsystem
- X: Anregung durch das Fahrzeug
- Y: axiale Richtung des Zylinderraumes
- Z: Durchflussrichtung des Volumenstromes

## Patentansprüche

1. Luftfederanordnung (1) eines Fahrzeuges bestehend aus:
- einem Luftfederbalg (2) aus elastomerem Werkstoff, der unter Ausbildung einer Schlaufe (7) eine volumenelastische Luftkammer (A, 6) umschließt;
- einem Deckel (3) und Abrollkolben (4), die je einen Anschlussbereich für das jeweilige Balgende aufweisen, wobei die Schlaufe (7) an der Außenwand (8) des Abrollkolbens abrollen kann; sowie
- einem Zusatzvolumen (B, 10), das mittels einer Verbindung (C, 11, 18, 22), die eine Luftsäule (12) umfasst, mit der volumenelastischen Luftkammer (A, 6) kommuniziert;
- wobei die Verbindung (C, 11, 18, 22) ein dynamisches Ventilsystem (D, I, li, III) umfasst, das so arbeitet, dass in Abhängigkeit von der Frequenz und/oder der Amplitude und/oder des Druckes und/oder der Luftgeschwindigkeit der Luftsäule (12) die Verbindung geschlossen oder geöffnet werden kann oder eine gedrosselte Luftzufuhr erfolgt, wobei das dynamische Ventilsystem (I, II) einen Luftkanal (13, 25) und ein Feder-Masse-System umfasst, welches den Luftkanal (13, 25) geschlossen oder geöffnet hält,
**dadurch gekennzeichnet, dass** das Feder-Masse-System des Ventilsystems (III) eine Zylindermasse (23) umfasst, die von einer Feder (24) umgeben ist, die Zylindermasse innerhalb eines erweiterten Zylinderraumes in axialer Richtung (Y) nach beiden Seiten bewegbar ist und die Erweiterung des Zylinderraumes insbesondere gleichmäßig umlaufend ist und den Luftkanal (25) mit seinen beiden Enden (26) bildet, wobei im geschlossenen Zustand der Verbindung (22) die Zylindermasse eine der beiden Enden (26) des Luftkanals (25) versperrt, wobei der erweiterte Zylinderraum zwei konische Endbereiche (27) und einen zylindrischen Mittenbereich (28) aufweist und die Zylindermasse (23) innerhalb ihres mittigen Bereiches eine vorspringende Zusatzmasse (29) aufweist, die insbesondere gleichmäßig umlaufend angeordnet ist.

2. Luftfederanordnung nach Anspruch 1, **dadurch gekennzeichnet, dass** die Zylindermasse (23) eine Bohrung (30) besitzt, und zwar in Form einer Einzelbohrung oder eines Bohrungssystems, wobei die Bohrung (30) stets die Verbindung (22) luftdurchströmend erfasst und dabei so dimensioniert ist, dass eine dynamische Entkopplung gegeben ist.

## Claims

1. Air spring assembly (1) of a vehicle, comprising:
- an air spring bellows (2) of elastomeric material which encloses a volume-elastic air chamber (A, 6) so as to form a loop (7);
- a cover (3) and rolling piston (4) which each have a connecting region for the respective bellows end, wherein the loop (7) can roll on the outer wall (8) of the rolling piston; and
- an additional volume (B, 10) which communicates with the volume-elastic air chamber (A, 6) by means of a connection (C, 11, 18, 22) which comprises an air column (12);
- wherein the connection (C, 11, 18, 22) comprises a dynamic valve system (D, I, II, III) which operates in such a way that the connection can be closed or open or a throttled air supply takes place as a function of the frequency and/or amplitude and/or pressure and/or air speed of the air column (12), wherein the dynamic valve system (I, II) comprises an air duct (13, 25) and a spring-mass system which keeps the air duct (13, 25) closed or opened, **characterized in that** the spring-mass system of the valve system (III) comprises a cylinder mass (23) which is surrounded by a spring (24), the cylinder mass can be moved to both sides in the axial direction (Y) within a widened cylinder chamber, and the widening of the cylinder chamber particularly extends around uniformly and forms the air duct (25) together with its two ends (26), wherein the cylinder mass blocks off one of the two ends (26) of the air duct (25) when the connection (22) is in the closed state, wherein the widened cylinder chamber has two conical end regions (27) and a cylindrical mid-region (28), and the cylinder mass (23) is provided within its central region with a projecting additional mass (29) which is arranged such that it particularly extends around uniformly.

2. Air spring assembly according to Claim 1, **characterized in that** the cylinder mass (23) has a bore (30), specifically in the form of a single bore or of a bore system, wherein the bore (30) is in permanent air-flow engagement with the connection (22) and at the same time is dimensioned such that dynamic uncoupling is possible.

## Revendications

1. Ensemble ressort pneumatique (1) d'un véhicule, composé de:
- un soufflet de ressort pneumatique (2) en matériau élastomère, qui entoure une chambre à air à volume élastique (A, 6) en formant une boucle (7);
- un couvercle (3) et un piston roulant (4), qui présentent chacun une région de raccordement pour l'extrémité respective du soufflet, dans lequel la boucle (7) peut rouler sur la paroi extérieure (8) du piston roulant;
- un volume additionnel (B, 10), qui communique avec la chambre à air à volume élastique (A, 6) au moyen d'un raccordement (C, 11, 18, 22), qui contient une colonne d'air (12);
- dans lequel le raccordement (C, 11, 18, 22) comporte un système de soupape dynamique (D, I, II, III), qui opère de telle manière que, en fonction de la fréquence et/ou de l'amplitude et/ou de la pression et/ou de la vitesse de l'air de la colonne d'air (12), le raccordement puisse être fermé ou ouvert ou qu'il se produise une arrivée d'air étranglée, dans lequel le système de soupape dynamique (I, II) comprend un canal d'air (13, 25) et un système à ressort-masse, qui maintient le canal d'air (13, 25) fermé ou ouvert,
**caractérisé en ce que** le système à ressort-masse du système de soupape (III) comprend une masse cylindrique (23), qui est entourée par un ressort (24), la masse cylindrique est mobile en direction axiale (Y) vers les deux côtés à l'intérieur d'une chambre cylindrique élargie et l'élargissement de la chambre cylindrique est en particulier uniformément périphérique et forme le canal d'air (25) avec ses deux extrémités (26), dans lequel à l'état fermé du raccordement (22) la masse cylindrique bloque une des deux extrémités (26) du canal d'air (25), dans lequel la chambre cylindrique élargie présente deux zones d'extrémité coniques (27) et une zone centrale cylindrique (28) et la masse cylindrique (23) présente, dans sa zone centrale, une masse additionnelle saillante (29), qui est disposée en particulier uniformément en périphérie.

2. Ensemble ressort pneumatique selon la revendication 1, **caractérisé en ce que** la masse cylindrique (23) présente un alésage (30), notamment en forme d'alésage unique ou d'un système d'alésages, dans lequel l'alésage (30) rejoint toujours le raccordement (22) avec passage de l'air et est en l'occurrence dimensionné de telle manière qu'il existe un découplage dynamique.
